# EUROPÄISCHE PATENTSCHRIFT

(11) **EP 4 065 469 B1**
(45) Veröffentlichungstag und Bekanntmachung des Hinweises auf die Patenterteilung: **18.09.2024**
(21) Anmeldenummer: 20803836.4
(22) Anmeldetag: 09.11.2020
(51) Int. Cl.: B64D 11/06, B60N 2/70

(54) **FAHRZEUGSITZ MIT NETZARTIGER STRUKTUR IN EINER SITZSCHALE**
VEHICLE SEAT WITH A NET-LIKE STRUCTURE IN A SEAT SHELL
SIÈGE DE VÉHICULE À STRUCTURE RÉTICULAIRE DANS UNE COQUE DE SIÈGE

(30) Priorität: 29.11.2019 DE 102019132557
(43) Veröffentlichungstag der Anmeldung: 05.10.2022
(73) Patentinhaber: Airbus Operations GmbH, 21129 Hamburg (DE)
(72) Erfinder: PIRKLBAUER, Peter Leopold, 21129 Hamburg (DE)
(74) Vertreter: LKGLOBAL Lorenz & Kopf Patentanwalt Attorney at Law PartG mbB
(86) Internationale Anmeldenummer: PCT/EP2020/081536
(87) Internationale Veröffentlichungsnummer: WO 2021/104843

(56) Entgegenhaltungen:
- EP-A2- 1 177 935
- WO-A1-2015/045143
- DE-A1- 102010 018 822
- US-A1- 2002 089 219
- US-A1- 2008 290 715
- US-B2- 9 126 519

## Beschreibung

### TECHNISCHES GEBIET

Die Erfindung betrifft einen Fahrzeugsitz sowie ein Flugzeug mit mindestens einer Kabine und mindestens einem darin angeordneten Fahrzeugsitz.

### HINTERGRUND DER ERFINDUNG

Fahrzeugsitze dienen der Aufnahme sitzender Passagiere in einem Fahrzeug. Der Aufbau eines Fahrzeugsitzes hängt dabei von einem Belastungsszenario ab, für das der Fahrzeugsitz eine entsprechende Zulassung erhalten soll. Je nach Fahrzeugart unterscheiden sich die Belastungsszenarien. Bei Flugzeugsitzen werden etwa maximale statische und dynamische Betriebslasten angenommen, die auf einen Passagier und den Sitz wirken können, ohne dass die Funktion des Sitzes beeinträchtigt wird.

Flugzeugsitze weisen üblicherweise ein Gestell mit einem vorderen Sitzbein und einem hinteren Sitzfuß auf, zwischen denen sich Diagonalstreben erstrecken. Eine rohrartige Querstrebe erstreckt sich waagerecht an dem Gestell und kann eine oder mehrere Sitzflächen aufnehmen. Eine Rückenlehne ist üblicherweise schwenkbar an dem Gestell angeordnet. Aufgrund der hohen Anzahl von Passagiersitzen in einer Flugzeugkabine werden die Flugzeugsitze aus leichten und festen Materialien hergestellt, sodass ein resultierendes Gesamtgewicht des Sitzes minimiert wird. Das Konzept solcher Flugzeugsitze existiert bereits seit Jahrzehnten und wurde weitgehend nur in Teilaspekten verbessert.

DE 10 2010 018822 A1 offenbart einen Fahrzeugsitz für offene oder halboffene motorisierte Freizeitfahrzeuge, wie Rasentraktoren, Golfmobile, Buggys oder dergleichen, bei dem ein Sitzteil und eine Rückenlehne zusammen einteilig ausgebildet sind, wobei das Sitzteil und die Rückenlehne eine gemeinsame Grundkörperkonstruktion und mindestens ein darüber gespanntes netzartiges Gewebe aufweisen und das netzartiges Gewebe als eine mögliche Kontaktfläche zu einer auf dem Sitz sitzenden Person ausgebildet ist. Das netzartige Gewebe ist witterungsbeständig und derart gestaltet ist, dass es in einer Längsrichtung des Fahrzeugsitzes dehnbarer ist als in einer Breitenrichtung des Fahrzeugsitzes.

WO 2015/045143 A1 zeigt einen Sitz mit geschlossenen Sitzrahmen und Netzen, die an den Sitzrahmen befestigt sind und die die geschlossenen Bereiche der Sitzrahmen abdecken. Die Sitzrahmen sind aus ersten Positionen, in denen die Sitzrahmen die Sitzflächen der Netze in einem ersten ausgefahrenen Zustand abstützen, in zweite Positionen ausfahrbar, in denen die Sitzrahmen die Abstützung in einem zweiten ausgefahrenen Zustand übernehmen, in dem die Sitzflächen der Netze stärker ausgefahren sind als im ersten ausgefahrenen Zustand.

EP 1 177 935 A2 offenbart ein Sitzelement mit einem Gurtelement in der Rückseite jedes Polsterelements, wobei das Gurtelement durch Eingriff mit einem geeigneten Abschnitt eines Rückenrahmens an seinem einen Ende und mit einem geeigneten Abschnitt eines Sitzrahmens an dem anderen Ende gehalten wird.

US 2002/089219 A1 zeigt einen Fahrzeugsitz, der aus einem konturierten Rohrrahmen besteht, der die Kanten einer Sitzfläche und einer Rückenlehne definiert, und der gespannte Gurte und ein elastomeres Sitznetzgewebe aufweist. An der Sitzfläche und der Rückenlehne sind jeweils zwei Gurte angebracht. Das Elastomer-Sitznetzgewebe bildet eine elastomere Sitzfläche, die sich um den Insassen legt.

US 2008/290715 A1 offenbart eine Flugzeugpassagiersitzbaugruppe mit zwei primären und modularen Komponenten: einem strukturellen Rahmen, der die Passagierabstützung und die dynamischen Lastpfade für die Sitzbaugruppe bereitstellt, und einem Komfortrahmen, der die Passagiersitzfläche und die äußere Polsterschicht für die Sitzbaugruppe bereitstellt. Der strukturelle Rahmen dient als Träger für einen Stoffträger, der die äußere Polsterschicht enthält.

### ZUSAMMENFASSUNG DER ERFINDUNG

Es ist Aufgabe der Erfindung, einen alternativen Fahrzeugsitz vorzuschlagen, der hinsichtlich des Gewichts weiter verbessert ist und dennoch an bereits bestehenden Befestigungselementen in einer Passagierkabine des betreffenden Fahrzeugs befestigt werden kann.

Die Aufgabe wird gelöst durch einen Fahrzeugsitz mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Fahrzeugsitz vorgeschlagen, aufweisend mindestens eine Sitzschale, wobei die Sitzschale einen Rahmen mit zwei voneinander beabstandeten Rahmeneinheiten und eine sich von einer der Rahmeneinheiten zu der anderen Rahmeneinheit erstreckende Schalenflächenanordnung aufweist, wobei die Schalenflächenanordnung eine netzartige Struktur aus einem ersten faserverstärkten Kunststoff aufweist, und wobei die Sitzschale mindestens ein Halteelement aufweist, das mit einem korrespondierenden Aufnahmeelement zum Befestigen der Sitzschale verbunden ist.

Eine wesentliche Komponente des Fahrzeugsitzes ist die Sitzschale, die die Sitzfunktion bereitstellt. Die Sitzschale kann dabei auf unterschiedliche Arten in dem betreffenden Fahrzeug angebracht sein. Neben einem eigens für die Sitzschale vorgesehenen Gestell wäre auch denkbar, die Sitzschale direkt in dem Fahrzeug, beispielsweise auf einem geeigneten Absatz oder einer geeigneten Fläche anzuordnen.

Die Sitzschale weist einen Rahmen auf, der durch die netzartige Struktur zu einer vollständigen Sitzschale ergänzt ist. Als netzartige Struktur ist eine Struktur zu verstehen, die eine Vielzahl von linien- oder streifenförmigen Faserabschnitten aufweist, welche sich in Knotenpunkten überschneiden. Ein zwischen den Rahmeneinheiten liegender Bereich ist folglich nicht mit einem durchgehenden, flächigen Gebilde ausgefüllt, sondern weist von Faserabschnitten abgegrenzte, offene Maschen auf. Da die netzartige Struktur aus dem ersten faserverstärkten Kunststoff besteht, ist er formstabil.

Die netzartige Struktur könnte für eine Bespannung mit Textilien dienen. Weiterhin kann sie auch als Innenstruktur für eingeschäumte Bauteile dienen, deren äußere Schale etwa einem Spritzgussverfahren entspringt.

Eine freie geometrische Auslegung ist hierbei ein besonderer Vorteil, einen optimalen Leichtbau zu erhalten, bei der ein Faserroving gewünschter Stärke und Länge mit Harz getränkt und über eine Ablagevorrichtung gelegt wird.

Der erste faserverstärkte Kunststoff kann eine Matrix aus einem Kunststoffmaterial mit darin eingebetteten Verstärkungsfasern aufweisen. Der Kunststoff kann dabei ein wärmehärtbares Harz oder ein thermoplastisches Material aufweisen. Die Verstärkungsfasern könnten insbesondere als Kohlefasern ausgeführt sein. Alternativ wären auch Glasfasern, Aramidfasern oder andere, hoch zugfeste Verstärkungsfasern sowie Naturfasern wie proteinbasierte Spinnenseide oder Rayon denkbar. Der Begriff "erste" ist lediglich zur Unterscheidung des in der netzartigen Struktur verwendeten Materials von einem anderen Material gedacht, welches weiter nachfolgend beschrieben wird.

Die Rahmeneinheiten bilden eine Schnittstelle zwischen einer Befestigungsfläche, einem Gestell oder einer anderen Basis und der netzartigen Struktur. Sie können beispielsweise als laterale Rahmeneinheiten ausgeführt sein, welche sich lateral entlang der Sitzfläche und der Rückenlehne erstrecken. Die Rahmeneinheiten könnten geeignete Befestigungselemente aufweisen, die die netzartige Struktur aufnehmen können. Dies könnten etwa metallische Buchsen sein. In einem einfachen Fall kann die netzartige Struktur auch auf die Rahmeneinheiten auflaminiert sein. Die Befestigungselemente sind in diesem Fall durch die Materialverbindung zwischen der netzartigen Struktur und den Rahmeneinheiten gebildet.

Die Fahrzeugschale kann auch aus mehreren Materialen bestehen, die neben dem ersten faserverstärkten Kunststoff auch andere faserverstärkte Kunststoffe aufweisen können. Weiterhin ist der Einsatz von metallischen Bauteilen, wie Buchsen oder Befestigungselementen, denkbar. Es bietet sich aus Gewichtsgründen an, eine Aluminiumlegierung oder Titan zu verwenden. Alternativ kann auch ein Stahl verwendet werden, insbesondere ein rostfreier Stahl. Auch die Rahmeneinheiten können aus mehreren Materialien bestehen, beispielsweise einem faserverstärkten Kunststoff und darin integrierte oder daran angeordnete metallische Komponenten.

Die Aufnahmeelemente können in einem einfachen Fall als Bohrungen, Öffnungen, Halter oder Ausschnitte ausgeführt sein. Weiter nachfolgend werden separate Körper erwähnt, die verwendet werden können. Diese könnten beispielsweise aus einem metallischen Material bestehen, welches wie vorangehend geschildert ausgebildet sein kann.

Der besondere Vorteil dieses Aufbaus liegt darin, dass die netzartige Struktur durch einen geschickten Faserverlauf an zu erwartende Kraftverläufe im Innern der Sitzschale angepasst ist. Aus ergonomischen Gründen kann die Sitzschale eine räumlich gekrümmte Form aufweisen, die durch die Rahmeneinheiten und die netzartige Struktur eingenommen wird. Bei einer Belastung der Sitzschale mit einer darauf sitzenden Person können sich von der Form und der Belastung abhängige Kraftverläufe im Innern der Sitzschale ergeben. Die netzartige Struktur sieht eine Vielzahl von separaten Lastpfaden vor. Zwischen den einzelnen Lastpfaden wird gezielt Material ausgelassen. Durch Anpassung der Faserabschnitte, d.h. ihrer Breite und ihrer Verteilung über der Sitzschale, kann eine optimale Anpassung an die zu erwartenden Kraftverläufe erfolgen, sodass Faserabschnitte in der netzartigen Struktur optimal belastet werden. Die Belastung wird dabei insbesondere durch Zugkräfte charakterisiert, welche durch die Faserabschnitte optimal aufgenommen werden können. Das dreidimensionale Faserstrangdesign ist optimiert. Durch die netzartige Struktur kann eine ausreichende Festigkeit der Sitzschale erreicht werden, wobei durch verbleibende Lücken zwischen den einzelnen Faserabschnitten das Gewicht im Vergleich zu einer herkömmlichen, flächigen Sitzschale deutlich reduziert wird.

Die netzartige Struktur weist eine Vielzahl von linien- oder bandförmigen und sich überkreuzenden Faserabschnitten auf. Die linien- oder andersartigen Faserabschnitte können insbesondere als zusammenhängende Stränge von Fasern ausgebildet sein. Die Fasern könnten beispielsweise in einer oder wenigen Schichten vorgesehen sein. Die Schichten könnten sich über eine Breite von wenigen Millimetern bis wenigen Zentimetern erstrecken. Die Faserabschnitte könnten einen rechteckigen Querschnitt aufweisen, dessen Breitenerstreckung deutlich größer als dessen Höhenerstreckung ist. Die einzelnen Faserabschnitte könnten jedoch auch einen runden, beispielsweise kreisrunden oder ovalen oder auf andere Weise abgerundeten Querschnitt aufweisen. Die Herstellung der netzartigen Struktur könnte durch die Verwendung von Trockenfasern erreicht werden, welche an den Rahmeneinheiten angebracht werden, um sich auf gewünschte Weise zwischen den Rahmeneinheiten zu verteilen. Anschließend kann eine Tränkung mit Harz und eine Aushärtung erfolgen. Die Aushärtung des Harzes kann bspw. im Vakuumbeutel im Temperprozess oder per UV-Licht via exothermen Prozess unter Einsatz besonderer Härter durchgeführt werden. Es könnten indes auch vorimprägnierte Fasern oder Prepregs verwendet werden.

Mehrere Faserabschnitte sind durch ein einzelnes Faserhalbzeug ausgebildet, wobei das Faserhalbzeug durch mindestens eine Richtungsänderung an dem Rahmen mehrfach zwischen den Rahmeneinheiten verläuft. Das Faserhalbzeug wird folglich zwischen den beiden Rahmeneinheiten hin- und hergeführt und dabei um Befestigungselemente gelenkt. Die Fasern des Faserhalbzeugs sind als Endlosfasern realisiert. Die gesamte netzartige Struktur ist durch ein einzelnes, Endlosfasern aufweisendes Faserhalbzeug hergezustellt. Hierdurch wird ein noch besserer Kraftfluss realisiert. Die Befestigungselemente könnten in Form von Öffnungen oder Haken ausgeführt sein. Alternativ dazu könnte die netzartige Struktur auch auf die Rahmeneinheiten auflaminiert oder geklebt sein.

In einer bevorzugten Ausführungsform sind zumindest 90% einer durch die Schalenflächenanordnung aufgespannten Oberfläche von der netzartigen Struktur überdeckt. Die netzartige Struktur bildet demgemäß einen Großteil der Schalenflächenanordnung aus. Lediglich Außenkanten oder Verstärkungskanten oder dergleichen könnten zusätzlich zu der netzartigen Struktur vorgesehen sein. Dadurch wird eine größtmögliche Gewichtseinsparung erreicht.

Es ist bevorzugt, wenn höchstens 75% einer durch die netzartige Struktur aufgespannten Netzoberfläche geschlossen sind. Dadurch bilden 25% der durch die netzartige Struktur aufgespannten Netzoberfläche Lücken. Es ist bevorzugt, diesen Anteil noch weiter zu erhöhen, um eine noch bessere Gewichtseinsparung zu ermöglichen. Beispielsweise könnte der geschlossene Anteil geringer als 75% und insbesondere geringer als 60% und besonders bevorzugt höchstens 50% sein.

Bevorzugt sind die Rahmeneinheiten jeweils als ein L-förmiges Rahmenbauteil ausgebildet. Durch diese wird eine allgemeine Form der Sitzschale vorgegeben. Die beiden Schenkel der L-Form könnten dabei die Sitzfläche und die Rückenlehne begrenzen. Es ist bevorzugt, die Rahmenbauteile integral zu fertigen, sodass insbesondere die beiden Schenkel nahtlos ineinander übergehen und der Kraftfluss optimiert wird. Es ist weiterhin denkbar, dass der Abstand der Rahmenbauteile im Bereich der Sitzfläche größer ist, als an einer Oberseite der Rückenlehne.

In einer vorteilhaften Ausführungsform sind die Rahmeneinheiten aus einem zweiten faserverstärkten Kunststoff ausgebildet. Der zweite faserverstärkte Kunststoff könnte dem ersten faserverstärkten Kunststoff entsprechen. Je nach gewünschter Ausführung der netzartigen Struktur könnten sich die beiden Kunststoffe jedoch auch voneinander unterscheiden. Da die Rahmenbauteile als weitgehend durchgängige, lückenlose Bauteile ausgebildet sein können, könnten andere Fertigungsverfahren als bei der netzartigen Struktur in Betracht gezogen werden. Ein Vakuuminfusionsverfahren kann sich anbieten, wenn etwa ein faserverstärkter Kunststoff auf Basis eines wärmehärtbaren Harzes verwendet wird. Sind die beiden faserverstärkten Kunststoffe identisch, wäre eine integrale Fertigung des gesamten der gesamten Sitzschale ebenso denkbar.

Es ist vorteilhaft, wenn die Rahmeneinheiten jeweils einen oberen Ausschnitt und einen unteren Ausschnitt als Halteelemente aufweisen, wobei die Aufnahmeelemente zumindest bereichsweise stabförmige Körper aufweisen, die mit den Halteelementen korrespondierend geformt sind. Die Rahmeneinheiten können dann auf die stabförmigen Körper gesetzt oder damit verbunden werden. Die Lasteinleitung von der Sitzschale in eine die Sitzschale aufnehmende Basis, d.h. eine Aufnahmefläche, ein Gestell oder dergleichen, kann folglich ähnlich wie in herkömmlichen Fahrzeugsitzen erfolgen. Die Sitzschale könnte dann etwa mit herkömmlichen Gestellen für Fahrzeugsitze verbunden werden. Die stabförmigen Körper können als rohrartige Querträger ausgebildet sein. Diese könnten aus einem metallischen Material, aus einem faserverstärkten Kunststoff oder aus einem Mix dieser Materialien ausgebildet werden.

Es könnte sich anbieten, die Querträger verschiebbar zu gestalten, um auf unterschiedliche Sitzschienenabstände reagieren zu können. Beine eines Gestells könnten weiterhin auch lediglich an Seitenwangen bzw. an Seiten der Querträger angeordnet werden.

In einer vorteilhaften Ausführungsform ist zumindest ein Aufnahmeelement als ein länglicher, durchgehender Körper ausgebildet, der dazu ausgebildet ist, sich zum Aufnehmen mehrerer nebeneinander angeordneter Sitzschalen durch ihre Halteelemente zu erstrecken. Damit könnte etwa ein Gestell mit mehreren Sitzen ausgestattet werden, um eine Sitzgruppe zu erhalten. In dem Zusammenhang könnten beispielsweise zwei zusätzliche Sitzschalen aufgenommen werden, die sich seitlich an eine mittlere Sitzschale anschließen. Es könnte dazu ein einzelnes Gestell eingesetzt werden.

Weiterhin kann die Schalenflächenanordnung eine Sitzfläche und eine Rückenlehne ausbilden. Eine separate Fertigung einer Sitzfläche und einer Rückenlehne ist dann nicht notwendig und die Faserabschnitte können sich bereichsweise in beide Flächen erstrecken.

Die Sitzfläche und die Rückenlehne könnten kontinuierlich ineinander übergehen. Dies führt zu einer besonders gewichtssparenden Ausführung. Im Zusammenhang mit einer L-förmigen Gestaltung der Rahmenbauteile ist jedoch ein Verschwenken der Rückenlehne nicht möglich.

Eine Dichte der netzartigen Struktur im Bereich der Sitzfläche kann höher sein als im Bereich der Rückenlehne. Dies ist ebenso ein bevorzugter Aspekt einer belastungsgerechten Gestaltung. Im Bereich der Sitzfläche sind höhere Lasten auf einer geringeren Oberfläche im Vergleich zu der Rückenlehne zu erwarten. Demzufolge folgt die Dichte der netzartigen Struktur ebenso der erwarteten Lastverteilung.

Besonders vorteilhaft weist der Fahrzeugsitz ferner ein Gestell zum Anordnen des Fahrzeugsitzes an einem Fußboden auf, wobei das Gestell mittels der Aufnahmeelemente mit den Halteelementen der Sitzschale gekoppelt ist. Der Fahrzeugsitz ist dann aus zwei Hauptkomponenten aufgebaut. Diese sind miteinander gekoppelt, um den Fahrzeugsitz auszubilden. Eine Basis des Fahrzeugsitzes wird dabei durch das Gestell gebildet. Das Gestell weist eine Unterseite auf, die dazu ausgebildet ist, mit Befestigungselementen am Boden des betreffenden Fahrzeugs gekoppelt zu werden. Diese könnten beispielsweise Sitzschienen umfassen, welche sich entlang der Längsrichtung der Kabine im Fußboden erstrecken. Üblicherweise werden Paare von voneinander beanstandeten Sitzschienen eingesetzt, die ein Längsraster mit voneinander beabstandeten Öffnungen zum Verriegeln eines mit dem Gestell koppelbaren Fittings besitzen. Das Gestell kann ferner eine Oberseite aufweisen, die zum Aufnehmen der Sitzschale ausgebildet ist. Das Gestell könnte zwei Paare sich überkreuzender Sitzbeine aus einem metallischen Material aufweisen. Damit könnte das Gestell ähnlich wie ein herkömmliches Sitzgestell ausgeführt sein. Alternativ wären auch eine Konstruktion mit Sitzfüßen und Sitzbeinen mit Diagonalstrebe denkbar. Das Gestell könnte im Wesentlichen aus einem metallischen Material, beispielsweise Aluminium, aufgebaut sein. Alternativ dazu wäre auch ein faserverstärkter Kunststoff denkbar.

Der erste faserverstärkte Kunststoff und/oder der zweite faserverstärkte Kunststoff könnte Kohlefasern aufweisen, die in eine Matrix aus einem Kunststoff eingebettet sind. Damit wird ein geringstmögliches Gewicht bei hoher Festigkeit realisiert. Damit könnten der erste faserverstärkte Kunststoff und der zweite faserverstärkte Kunststoff auch identisch sein. Es bietet sich an, beide Kunststoffe mit Kohlefasern zu versehen.

Ein weiteres wesentliches Merkmal der Sitzschale könnte auch in der Integration von Bauteilen aus den gleichen oder andersartigen Materialien liegen, wie etwa eines Auges oder einer Buchse aus Metall. Hierbei ist speziell das fasergerechte Design und Formschluss der Metallteile zu nennen, durch die etwa in Umwicklungspunkten eine optimierte Ablage der Fasern erfolgt und eine faserrechter Formschluss erfolgt. Weiterhin könnte auch ein integrales Fahrzeugsitzdesign oder auch Fahrzeugsitzbankdesign möglich sein, bei der die Ausführung hybrid erfolgt.

Die Erfindung betrifft ferner ein Flugzeug, aufweisend mindestens eine Kabine mit mindestens einem darin angeordneten Fahrzeugsitz nach einem der vorhergehenden Ansprüche.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine Sitzschale in einer dreidimensionalen Ansicht.
Fig. 2 zeigt die Sitzschale mit einer Polsterung.
Fig. 3 zeigt ein Sitzgestell in einer dreidimensionalen Ansicht.
Fig. 4 zeigt mehrere, nebeneinander angeordnete Sitzschalen.
Fig. 5 zeigt eine Passagiersitzgruppe aus Sitzschalen der Fig. 1 und dem Sitzgestell der Fig. 3.
Fig. 6 zeigt eine Schalenflächenanordnung für Fahrzeugsitze mit verstellbarer Rückenlehne.
Fig. 7 zeigt eine Passagiersitzgruppe mit Sitzschalen mit einer Schalenflächenanordnung aus Fig. 6 sowie einem Gestell aus Fig. 3 in einer Zwei-Seiten-Ansicht.
Fig. 8 zeigt einen Wickelplan für Fasern.
Fig. 9 zeigt ein Flugzeug, in dem die Fahrzeugsitze angeordnet sein können.
Fig. 10a-10c zeigen eine schematische Darstellung eines Formwerkzeugs.

### DETAILLIERTE DARSTELLUNG EXEMPLARISCHER AUSFÜHRUNGSFORMEN

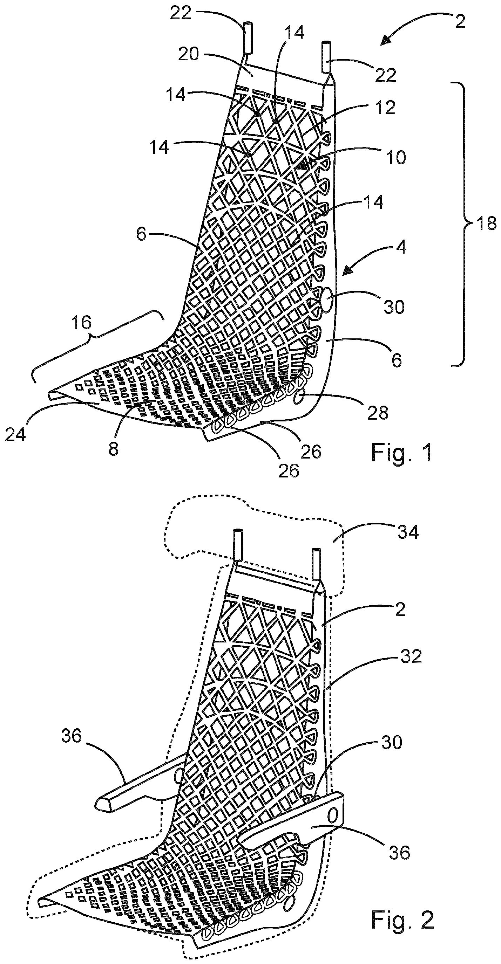

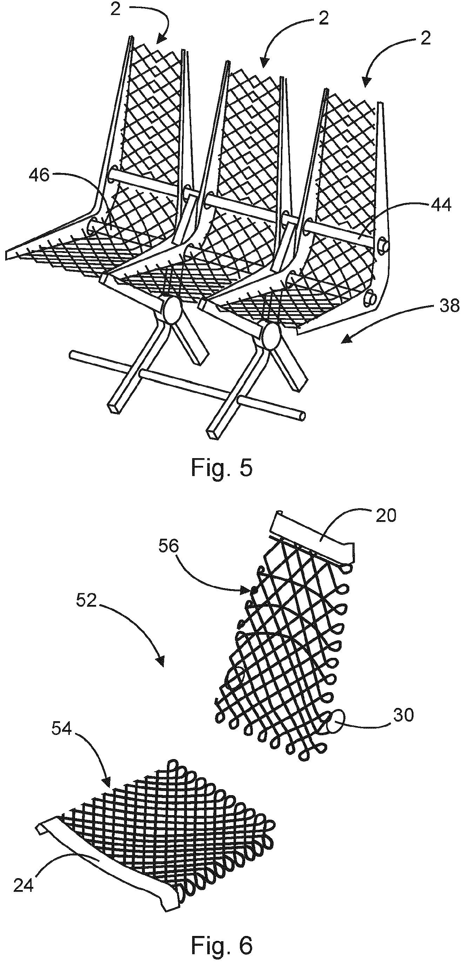

Fig. 1 zeigt eine Sitzschale 2 für einen Fahrzeugsitz, der beispielsweise in der weiter nachfolgenden Fig. 6 vollständig dargestellt wird. Die Sitzschale 2 weist einen Rahmen 4 mit 2 voneinander beanstandeten Rahmeneinheiten 6 auf. Diese sind beispielhaft als L-förmige Rahmenbauteile ausgestaltet. Zwischen den Rahmeneinheiten 6 ist eine Schalenflächenanordnung 8 aufgespannt, welche eine netzartige Struktur 10 mit einer Vielzahl von linien- oder bandförmigen und sich überkreuzenden Faserabschnitten 12 aufweist. Durch die Anordnung der Faserabschnitte 12 ergibt sich eine Anordnung von offenen und durch die Faserabschnitte 12 abgegrenzten Maschen mit Knotenpunkten 14. Es werden dadurch eine Sitzfläche 16 und eine Rückenlehne 18 gebildet. In diesem Beispiel geht die Sitzfläche 16 übergangslos in die Rückenlehne 18 über.

An einer Oberseite der Rückenlehne 18 ist ein oberes Querversteifungselement 20 angeordnet, welches sich horizontal von einem der Rahmenbauteile 6 zu dem anderen Rahmenbauteil 6 erstreckt. Des Weiteren befinden sich dort Halter 22 zum Aufnehmen einer in dieser Darstellung nicht gezeigten Kopfstütze. An einer vorderen Begrenzung der Sitzfläche 16 ist ein unterer unteres Querversteifungselement 24 vorgesehen, das sich ebenso horizontal von einem der Rahmenbauteile 6 zu dem anderen Rahmenbauteil 6 hin erstreckt.

Die Faserabschnitte 12 verlaufen mit einer vorgegebenen wechselnden Ausrichtung unter Bildung eines Zick-Zack-Musters zwischen den Rahmeneinheiten 6. Hierzu können an den Rahmeneinheiten 6 entsprechende Befestigungselemente 26 vorgesehen sein, um die ein Faserbündel gelegt werden kann. Beim Legen eines Faserbündels um ein Befestigungselement 26 erfolgt eine Richtungsänderung. Das Legen der Fasern erfolgt idealerweise in Spannungsrichtung. Selbstverständlich kann die netzartige Struktur 10 auch separat hergestellt werden, so dass das Faserbündel nicht um die Befestigungselemente 26, sondern um entsprechende Halter eines Formwerkzeugs gelegt wird. Nach Entnahme der netzartigen Struktur aus dem Formwerkzeug können die sich dadurch ergebenden Laschen mit den Rahmeneinheiten 6 verbunden werden. Dies kann neben der Verwendung mechanischer Befestigungselemente auch durch Auflaminieren oder Kleben erfolgen.

Bevorzugt sind die Faserabschnitte 12 als Abschnitte eines Endlosfaserbündels ausgebildet. Die netzartige Struktur 10 wird dann durch Folgen eines Wickelplans hergestellt, der die Erstreckungsrichtung und die Richtungsänderungen der Endlosfasern vorgibt. Hierbei können sich nach dem vorliegenden Ausführungsbeispiel auch einzelne Faserabschnitte 12 von der Sitzfläche 16 in die Rückenlehne 18 erstrecken und umgekehrt. Damit wird eine ergonomisch gekrümmte, belastungsgerecht gestaltete Sitzschale 2 erzeugt.

Die Rahmenbauteile 6 weisen beispielhaft Halteelemente 28 und 30 auf, die als ein unterer Ausschnitt 28 und ein oberer Ausschnitt 30 ausgebildet sind. Dabei liegen jeweils zwei Halteelemente 28 bzw. 30 einander gegenüber, sodass ein stab- oder rohrförmiger Körper durch sie hindurch gesteckt werden kann. Die Sitzschale 2 kann dadurch an einem hier nicht dargestellten Sitzgestell befestigt werden.

Fig. 2 zeigt die Sitzschale 2, welche mit einer zusätzlichen Polsterung 32 sowie einer Kopfstütze 34 ausgestattet ist. Seitlich an die oberen Halteelemente 30 schließen sich Armlehnen 36 an, die schwenkbar an der Sitzschale 2 angeordnet sind. Die Polsterung 32 kann mittels insbesondere offenporigen Schaumstoffs aus einem elastischen Material hergestellt sein. Die Kopfstütze 34 könnte indes auch einen Kern aus einem geschlossenporigen, festen Schaumstoff aufweisen, der mit einem elastischen, offenporigen Schaumstoff umgeben ist.

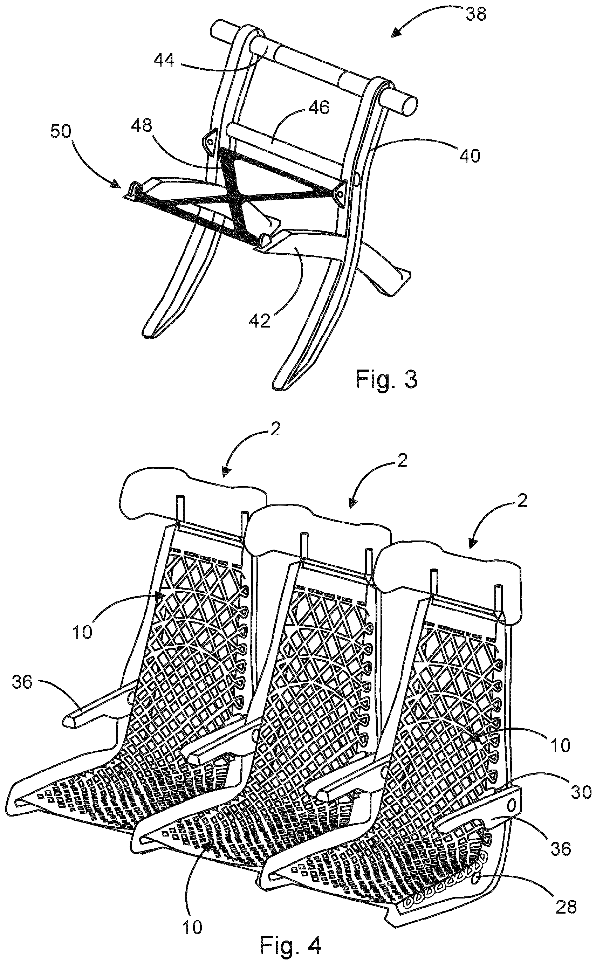

Fig. 3 zeigt ein Sitzgestell 38, dass 2 einander kreuzenden Sitzbeine 40 und 42 aufweist. Die Sitzbeine 40 tragen einen oberen Querträger 44 als Aufnahmeelement, das mit den oberen Ausschnitten 30 koppelbar ist. Weiterhin wird ein unterer Querträger 46 gezeigt, der zur Aufnahme der unteren Ausschnitte 28 vorgesehen ist. Beide Querträger 44 und 46 werden ausschließlich von einem Paar der Sitzbeine 40 gehalten. Von dem unteren Querträger 46 erstreckt sich eine Stützfläche 48 zu oberen Enden 50 des anderen Paares von Sitzbeinen 42. Die Stützfläche 48 kann aus einander kreuzenden bandartigen Stegen aus eines faserverstärkten Kunststoff hergestellt sein. Alternativ dazu könnten Gurte eingesetzt werden.

Wie in Fig. 4 gezeigt, können mehrere Sitzschalen 2 nebeneinander angeordnet werden, um eine einzelne Sitzgruppe bereitzustellen. Die Sitzschalen 2 können dazu aneinander befestigt werden oder ausschließlich über lateral nach außen kragende Querträger 44 und 46 mit dem Sitzgestell 38 verbunden sein.

Fig. 5 zeigt nun mehrere Sitzschalen 2 mit Polsterung 32 und Kopfstützen 34, die auf einem einzelnen Sitzgestell 38 mit unteren und oberen Querträgern 44 und 46 gelagert sind. Hierdurch wird eine gewichtssparende Sitzgruppe bereitgestellt.

Fig. 6 zeigt indes eine Variante einer Schalenflächenanordnung 52, die aus zwei separat hergestellten Komponenten in Form einer Sitzfläche 54 und einer Rückenlehne 56 besteht. Diese können zum Herstellen von Fahrzeugsitzen 58 verwendet werden, die eine verstellbare Rückenlehne 56 aufweisen. Hierzu sind statt der L-förmigen Rahmeneinheiten 6 aus Fig. 1 zweigeteilte Rahmeneinheiten 60 eingesetzt, die ein oberes Rahmenbauteil 62 und ein unteres Rahmenbauteil 64 aufweisen. Auch diese können, wie dargestellt, durch obere und untere Querträger 44 und 46 an einem Sitzgestell 38 eingesetzt werden.

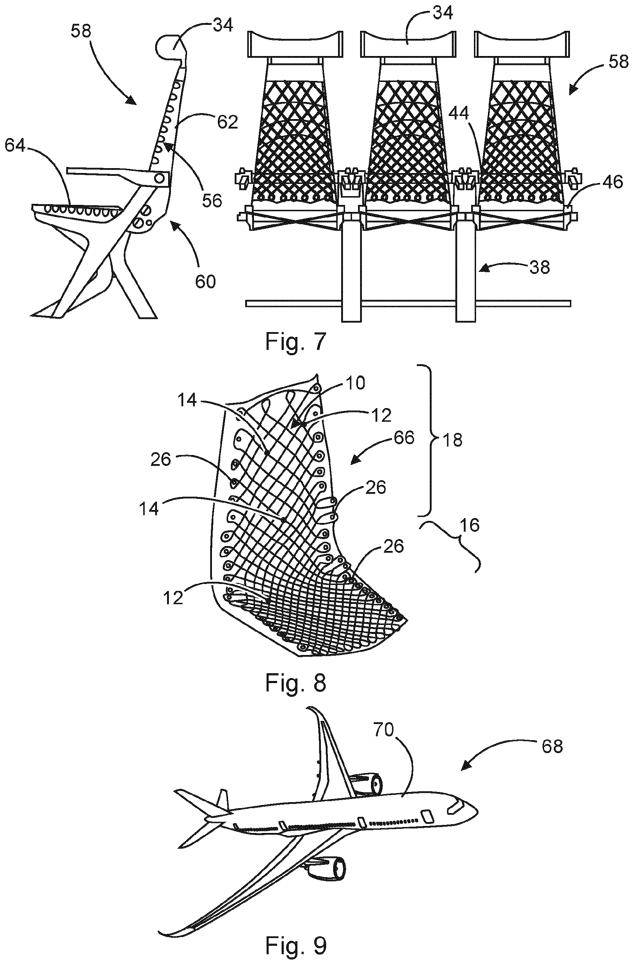

Fig. 8 zeigt einen beispielhaften Wickelplan 66 zum Legen von Fasern zum Bereitstellen der Faserabschnitte 12 zur Herstellung einer Sitzschale 2. Hier ist besonders gut erkennbar, wo einzelne Befestigungselemente 26 angeordnet werden müssen, um eine Befestigung der netzartigen Struktur 10 zu ermöglichen. Diese können auch Klebstoff oder einen Aufnahmeabschnitt zum Auflaminieren der netzartigen Struktur umfassen. Zudem ist erkennbar, dass eine Dichte der netzartigen Struktur 10 im Bereich der Sitzfläche 16 größer ist als im Bereich eine Rückenlehne 18.

Fig. 9 zeigt beispielhaft ein Flugzeug 68 als ein Beispiel für ein Fahrzeug, das eine Passagierkabine 70 mit darin angeordneten Fahrzeugsitzen 2 bzw. 58 aufweisen kann.

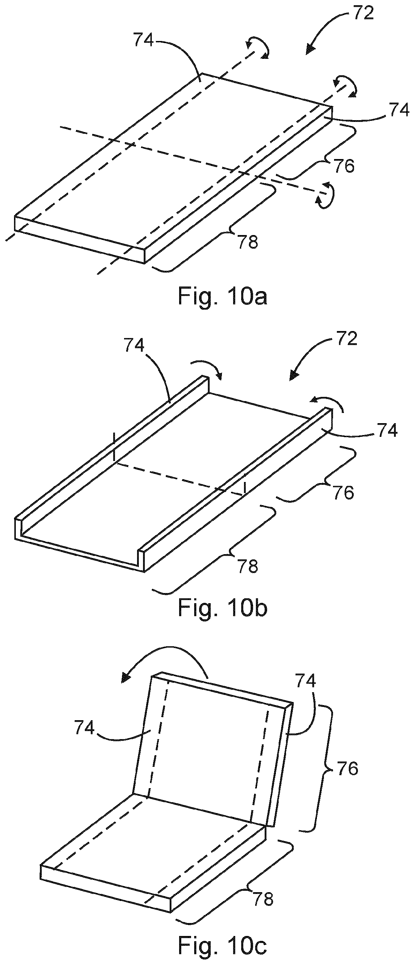

In den Fig. 10a bis 10c wird sehr schematisch ein Formwerkzeug 72 dargestellt, welches zur Herstellung der netzartigen Struktur 10 eingesetzt werden kann. Das Formwerkzeug 72 ist hier flach gezeigt, es kann jedoch eine mehrfach gewölbte und/oder gekrümmte Form aufweisen, um die gewünschte Form der netzartigen Struktur 10 zu erreichen.

Wie in den vorherigen Figuren erkennbar ist, ist die netzartige Struktur 10 an ihren Seiten etwas umgebogen, um sie auf die Rahmeneinheiten 6 aufzulegen und dort befestigen zu können. Weiterhin ist zum Ausbilden der Sitzfläche 16 und der Rückenlehne 18 eine prägnante Biegung vorgesehen. Dies könnte durch das schematisch dargestellte Formwerkzeug 72 erreicht werden. Dieses weist zwei klappbare Seitenteile 74 auf, welche zum Umformen eines auf dem Formwerkzeug 72 angeordneten Geleges verwendet werden, um die umgebogenen Seiten der netzartigen Struktur 10 herzustellen. Gleichzeitig könnte das Formwerkzeug 72 in Längsrichtung in einen ersten Abschnitt 76 und einen zweiten Abschnitt 78 unterteilt sein, die zum Umformen des Geleges zum Bereitstellen der Biegung zwischen Sitzfläche 16 und Rückenlehne 18 gegeneinander verschwenkbar sind. Diese Darstellung ist zur Vereinfachung unvollständig. Insbesondere könnte das Umklappen mit einer etwas anderen Mechanik hergestellt werden, um größere Biegeradien zu erhalten. Desweiteren könnte das auf dem Formwerkzeug befindliche Gelege mit einer formelastischen Abdeckung versehen werden, die zum Fixieren des Geleges dient. Das Formwerkzeug 72 könnte weiterhin erwärmbar sein, um ein thermoplastisches Matrixmaterial der Faserabschnitte 12 zu erweichen, oder um ein wärmehärtbares Harz auszuhärten.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Sitzschale
- 4: Rahmen
- 6: Rahmeneinheit
- 8: Schalenflächenanordnung
- 10: netzartige Struktur
- 12: Faserabschnitte
- 14: Knotenpunkt
- 16: Sitzfläche
- 18: Rückenlehne
- 20: oberes Querversteifungselement
- 22: Halter
- 24: unteres Querversteifungselement
- 26: Befestigungselement
- 28: unterer Ausschnitt / Halteelement
- 30: oberer Ausschnitt / Halteelement
- 32: Polsterung
- 34: Kopfstütze
- 36: Armlehne
- 38: Sitzgestell
- 40: Sitzbein
- 42: Sitzbein
- 44: oberer Querträger / Aufnahmeelement
- 46: unterer Querträger / Aufnahmelement
- 48: Stützfläche
- 50: oberes Ende
- 52: Schalenflächenanordnung
- 54: Sitzfläche
- 56: Rückenlehne
- 58: Fahrzeugsitz
- 60: Rahmeneinheit
- 62: oberes Rahmenbauteil
- 64: unteres Rahmenbauteil
- 66: Wickelplan
- 68: Flugzeug
- 70: Passagierkabine

## Patentansprüche

1. Fahrzeugsitz (58), aufweisend mindestens eine Sitzschale (2),
wobei die Sitzschale (2) einen Rahmen (4) mit zwei voneinander beabstandeten Rahmeneinheiten (6) und eine sich von einer der Rahmeneinheiten (6) zu der anderen Rahmeneinheit (6) erstreckende Schalenflächenanordnung (8) aufweist,
wobei die Schalenflächenanordnung (8) eine netzartige Struktur (10) aus einem ersten faserverstärkten Kunststoff aufweist,
wobei die Sitzschale (2) mindestens ein Halteelement (28, 30) aufweist, das mit einem korrespondierenden Aufnahmeelement (44, 46) zum Befestigen der Sitzschale (2) verbunden ist,
wobei die netzartige Struktur (10) eine Vielzahl von linien- oder bandförmigen und sich überkreuzenden Faserabschnitten (12) aufweist,
**dadurch gekennzeichnet, dass**
die Faserabschnitte (12) durch ein einzelnes Faserhalbzeug ausgebildet sind, wobei das Faserhalbzeug durch mindestens eine Richtungsänderung an dem Rahmen (4) mehrfach zwischen den Rahmeneinheiten (6) verläuft,
wobei die Faserabschnitte (12) der gesamten netzartigen Struktur (10) durch ein einzelnes, Endlosfasern aufweisendes Faserhalbzeug hergestellt sind.

2. Fahrzeugsitz (58) nach Anspruch 1,
wobei zumindest 90% einer durch die Schalenflächenanordnung (8) aufgespannten Oberfläche von der netzartigen Struktur (10) überdeckt ist.

3. Fahrzeugsitz (58) nach Anspruch 1 oder 2,
wobei höchstens 75% einer durch die netzartige Struktur (10) aufgespannten Netzoberfläche geschlossen ist.

4. Fahrzeugsitz (58) nach einem der vorhergehenden Ansprüche,
wobei die Rahmeneinheiten (6) jeweils als ein L-förmiges Rahmenbauteil ausgebildet sind.

5. Fahrzeugsitz (58) nach einem der vorhergehenden Ansprüche, wobei die Rahmeneinheiten (6) aus einem zweiten faserverstärkten Kunststoff ausgebildet sind.

6. Fahrzeugsitz (58) nach einem der vorhergehenden Ansprüche,
wobei die Rahmeneinheiten (6) jeweils einen oberen Ausschnitt (30) und einen unteren Ausschnitt (28) als Halteelemente (28, 30) aufweisen, und
wobei die Aufnahmeelemente (44, 46) zumindest bereichsweise stabförmige Körper aufweisen, die mit den Halteelementen (28, 30) korrespondierend geformt sind.

7. Fahrzeugsitz (58) nach Anspruch 6,
wobei zumindest ein Aufnahmeelement (28, 30) als ein länglicher, durchgehender Körper ausgebildet ist, der dazu ausgebildet ist, sich zum Aufnehmen mehrerer nebeneinander angeordneter Sitzschalen (2) durch ihre Halteelemente (28, 30) zu erstrecken.

8. Fahrzeugsitz (58) nach einem der vorhergehenden Ansprüche,
wobei die Schalenflächenanordnung (52) eine Sitzfläche (16) und eine Rückenlehne (18) ausbildet.

9. Fahrzeugsitz (58) nach Anspruch 8,
wobei die Sitzfläche (16) und die Rückenlehne (18) kontinuierlich ineinander übergehen.

10. Fahrzeugsitz (58) nach Anspruch 8 oder 9,
wobei eine Dichte der netzartigen Struktur (10) im Bereich der Sitzfläche (16) höher ist als im Bereich der Rückenlehne (18).

11. Fahrzeugsitz (58) nach einem der vorhergehenden Ansprüche,
ferner aufweisend ein Gestell (38) zum Anordnen des Fahrzeugsitzes an einem Fußboden, wobei das Gestell (38) mittels der Aufnahmeelemente (44, 46) mit den Halteelementen (28, 30) der Sitzschale (2) gekoppelt ist.

12. Fahrzeugsitz (58) nach einem der vorhergehenden Ansprüche,
wobei der erste faserverstärkte Kunststoff und/oder der zweite faserverstärkte Kunststoff Kohlefasern aufweist, die in eine Matrix aus einem Kunststoff eingebettet sind.

13. Flugzeug (68), aufweisend mindestens eine Kabine (70) mit mindestens einem darin angeordneten Fahrzeugsitz (58) nach einem der vorhergehenden Ansprüche.

## Claims

1. Vehicle seat (58) having at least one seat shell (2),
wherein the seat shell (2) has a frame (4) with two spaced-apart frame units (6) and a shell surface arrangement (8) extending from one of the frame units (6) to the other frame unit (6),
wherein the shell surface arrangement (8) has a net-like structure (10) composed of a first fibre-reinforced plastic,
wherein the seat shell (2) has at least one holding element (28, 30) which is connected to a corresponding receiving element (44, 46) for fastening the seat shell (2),
wherein the net-like structure (10) has a multiplicity of linear or strip-like and intersecting fibre portions (12),
**characterized in that** the fibre portions (12) are formed by a single semifinished fibre product, wherein the semifinished fibre product runs multiple times between the frame units (6) by means of at least one change in direction on the frame (4),
wherein the fibre portions (12) of the entire net-like structure (10) are produced by means of a single semifinished fibre product comprising continuous fibres.

2. Vehicle seat (58) according to Claim 1,
wherein at least 90% of a surface spanned by the shell surface arrangement (8) is covered by the net-like structure (10).

3. Vehicle seat (58) according to Claim 1 or 2,
wherein at most 75% of a net surface spanned by the net-like structure (10) is closed.

4. Vehicle seat (58) according to one of the preceding claims,
wherein the frame units (6) are each designed as an L-shaped frame component.

5. Vehicle seat (58) according to one of the preceding claims, wherein the frame units (6) are formed from a second fibre-reinforced plastic.

6. Vehicle seat (58) according to one of the preceding claims,
wherein the frame units (6) each have an upper cutout (30) and a lower cutout (28) as holding elements (28, 30), and
wherein the receiving elements (44, 46) have bodies which are rod-shaped, at least in some region or regions, and which are shaped so as to correspond to the holding elements (28, 30).

7. Vehicle seat (58) according to Claim 6,
wherein at least one receiving element (28, 30) is designed as an elongate, continuous body which, in order to receive a plurality of seat shells (2) arranged next to one another, is designed to extend through the holding elements (28, 30) thereof.

8. Vehicle seat (58) according to one of the preceding claims,
wherein the shell surface arrangement (52) forms a seat surface (16) and a backrest (18).

9. Vehicle seat (58) according to Claim 8,
wherein the seat surface (16) and the backrest (18) merge continuously into one another.

10. Vehicle seat (58) according to Claim 8 or 9,
wherein a density of the net-like structure (10) is higher in the region of the seat surface (16) than in the region of the backrest (18).

11. Vehicle seat (58) according to one of the preceding claims,
also having a stand (38) for arranging the vehicle seat on a floor, wherein the stand (38) is coupled to the holding elements (28, 30) of the seat shell (2) by means of the receiving elements (44, 46).

12. Vehicle seat (58) according to one of the preceding claims,
wherein the first fibre-reinforced plastic and/or the second fibre-reinforced plastic comprise/comprises carbon fibres embedded in a matrix composed of a plastic.

13. Aircraft (68) having at least one cabin (70) with at least one vehicle seat (58) according to one of the preceding claims arranged therein.

## Revendications

1. Siège de véhicule (58) présentant au moins une coque de siège (2),
la coque de siège (2) présentant un cadre (4) avec deux unités de cadre (6) espacées l'une de l'autre et un agencement de surface de coque (8) s'étendant de l'une des unités de cadre (6) à l'autre unité de cadre (6),
l'agencement de surface de coque (8) présentant une structure réticulée (10) en une première matière plastique renforcée par des fibres,
la coque de siège (2) présentant au moins un élément de retenue (28, 30) qui est relié à un élément de réception correspondant (44, 46) pour fixer la coque de siège (2), la structure réticulée (10) présentant une pluralité de sections de fibres (12) en forme de lignes ou de bandes et se croisant,
**caractérisé en ce que** les sections de fibres (12) sont réalisées par un seul demi-produit de fibres, le demi-produit de fibres s'étendant plusieurs fois entre les unités de cadre (6) par au moins un changement de direction sur le cadre (4),
les sections de fibres (12) de l'ensemble de la structure réticulée (10) étant fabriquées par un seul demi-produit de fibres présentant des fibres continues.

2. Siège de véhicule (58) selon la revendication 1,
au moins 90 % d'une surface définie par l'agencement de surface de coque (8) étant recouverte par la structure réticulée (10).

3. Siège de véhicule (58) selon la revendication 1 ou 2,
au plus 75 % d'une surface de réseau définie par la structure réticulée (10) étant fermée.

4. Siège de véhicule (58) selon l'une quelconque des revendications précédentes,
les unités de cadre (6) étant chacune réalisées sous la forme d'un composant de cadre en forme de L.

5. Siège de véhicule (58) selon l'une quelconque des revendications précédentes, les unités de cadre (6) étant réalisées en une deuxième matière plastique renforcée par des fibres.

6. Siège de véhicule (58) selon l'une quelconque des revendications précédentes,
les unités de cadre (6) présentant chacune une découpe supérieure (30) et une découpe inférieure (28) en tant qu'éléments de retenue (28, 30), et
les éléments de réception (44, 46) présentant au moins par zones des corps en forme de tige qui sont formés de manière à correspondre aux éléments de retenue (28, 30).

7. Siège de véhicule (58) selon la revendication 6,
au moins un élément de réception (28, 30) étant réalisé sous la forme d'un corps continu allongé qui est réalisé pour s'étendre à travers ses éléments de retenue (28, 30) pour recevoir plusieurs coques de siège (2) agencées côte à côte.

8. Siège de véhicule (58) selon l'une quelconque des revendications précédentes,
l'agencement de surface de coque (52) réalisant une surface d'assise (16) et un dossier (18).

9. Siège de véhicule (58) selon la revendication 8,
la surface d'assise (16) et le dossier (18) se rejoignant de manière continue.

10. Siège de véhicule (58) selon la revendication 8 ou 9,
une densité de la structure réticulée (10) étant plus élevée dans la zone de l'assise (16) que dans la zone du dossier (18).

11. Siège de véhicule (58) selon l'une quelconque des revendications précédentes,
présentant en outre un châssis (38) pour agencer le siège de véhicule sur un plancher, le châssis (38) étant couplé aux éléments de retenue (28, 30) de la coque de siège (2) au moyen des éléments de réception (44, 46).

12. Siège de véhicule (58) selon l'une quelconque des revendications précédentes,
la première matière plastique renforcée par des fibres et/ou la deuxième matière plastique renforcée par des fibres présentant des fibres de carbone qui sont incorporées dans une matrice d'une matière plastique.

13. Aéronef (68), présentant au moins une cabine (70) dans laquelle est agencé au moins un siège de véhicule (58) selon l'une quelconque des revendications précédentes.
